Europäisches Patentamt

European Patent Office (11) Veröffentlichungsnummer: **0 090 057**

Office européen des brevets **B1**

(19)

(12) **EUROPÄISCHE PATENTSCHRIFT**

(45) Veröffentlichungstag der Patentschrift: 02.09.87

(21) Anmeldenummer: **82102517.8**

(22) Anmeldetag: **25.03.82**

(51) Int. Cl.⁴: **G 01 D 15/08, B 41 J 3/20**

(54) **Verfahren zum Aufzeichnen von Informationen auf einem elektrosensitiven Aufzeichnungsträger.**

(43) Veröffentlichungstag der Anmeldung:
05.10.83 Patentblatt 83/40

(45) Bekanntmachung des Hinweises auf die Patenterteilung:
02.09.87 Patentblatt 87/36

(84) Benannte Vertragsstaaten:
DE FR GB IT

(56) Entgegenhaltungen:
EP-A-0 048 295
DE-A-1 548 595
DE-A-2 215 519
DE-A-2 717 335
US-A-3 441 946

(73) Patentinhaber: **IBM DEUTSCHLAND GMBH, Pascalstrasse 100, D-7000 Stuttgart 80 (DE)**
(84) Benannte Vertragsstaaten: **DE**

(73) Patentinhaber: **International Business Machines Corporation, Old Orchard Road, Armonk, N.Y. 10504 (US)**
(84) Benannte Vertragsstaaten: **FR GB IT**

(72) Erfinder: **Bahr, Jürgen, Dr., Rheinstrasse 49, D-7033 Herrenberg (DE)**
Erfinder: **Burckardt, Karl- H., Fuldastrasse 11, D-7033 Herrenberg- Oberjesingen (DE)**
Erfinder: **Goldrian, Gottfried, Dipl.- Ing., Gutacher Weg 18, D-7030 Böblingen (DE)**
Erfinder: **Rudolph, Volker, Dr., Finkenweg 20, D-7031 Aidlingen 3 (DE)**
Erfinder: **Spruth, Wilhelm G., Dr., Schuberstrasse 22, D-7030 Böblingen- Dagersheim (DE)**

(74) Vertreter: **Blutke, Klaus, Dipl.- Ing., Schönaicher Strasse 220, D-7030 Böblingen (DE)**

EP 0 090 057 B1

## Beschreibung

Die Erfindung betrifft ein Verfahren zum Aufzeichnen von durch Druckimpulse vorgegebenen Informationen auf einem elektrosensitiven Aufzeichungsträger mit einem auf diesem bewegbaren Elektroden-Druckkopf unter Benutzung einer Steuerschaltung für die zeitgerechte Erzeugung von die Aufzeichnung bewirkenden Schreibstrompulsen.

Derartige Verfahren vorzugsweise für Metallpapier-Drucker sind in den verschiedensten Ausführungsarten seit langem bekannt.

So zeigt beispielsweise die US Patentschrift 3 631 510 eine Registriervorrichtung, bei der eine Anzahl in einer Zeile angeordneter Fingerelektroden über einen Zeichengenerator taktgesteuert erregbar sind. Das elektrosensitive Papier besteht dabei aus einer ersten Schicht, dem Substrat, einer darüberliegenden schwarzen Epoxydharzschicht, einer darauf angebrachten zweiten, leitenden Schicht aus Aluminium oder einem anderen gutleitenden Metall und darüber schließlich eine ebenfalls leitende, aber einen elektrischen Widerstand darstellende Schicht aus Zinkoxid. Die Elektroden liegen dabei fest auf dem Papier auf, während eine Gegenelektrode großflächig in einiger Entfernung von den Schreibelektroden ebenfalls auf dem Papier, d.h. auf der mit Zinkoxid überzogenen metallisierten Oberfläche aufliegt. Selektiv an den Elektroden zugeführte Stromimpulse bewirken über die Widerstandserwärmung an der Zinkoxidschicht ein Verdampfen des Aluminiums an der Kontaktstelle. Zur Verbesserung der Sichtbarkeit der aufgezeichneten Punkte werden zu jedem Punkt mehrere Impulse zugeführt.

Aus der US PS 3 441 946 ist eine weitere Anordnung für ein mit elektrosensitivem Papier arbeitendes Registriergerät bekannt. Die eingangsseitig zugeführten Impulse können an sich erhebliche Amplitudenunterschiede aufweisen, was zu verschieden großen Ausschlägen der Schreibelektrode führen kann. Die Eingangsimpulse werden in eine Anzahl kurzer Impulse umgewandelt, die nach Verstärkung der Schreibelektrode zugeführt werden, die einerseits über das Papier geführt wird, das sich außerdem noch weiter bewegt. Die Antriebsgeschwindigkeit der Schreibelektrode wird mit der Frequenz der Schreibimpulse koordiniert. D.h. die Ausgangsfrequenz eines steuernden Oszillators kann dabei entsprechend sich ändernden Bedingungen, wie z. B. einem anderen Maßstab und einer entsprechend geringeren oder höheren Geschwindigkeit des Registrierpapiers verändert werden. Damit erreicht man, daß alle auf dem Registrierpapier aufgezeichneten Punkte im wesentlichen immer vergleichbare Abstände voneinander aufweisen.

Da die Impulse bei diesen elektrosensitiven Papieren bei ausreichender Amplitude sofort zu einer guten Markierung führen, können sie relativ kurz sein. Dadurch kann der Leistungsbedarf minimal gehalten werden.

Dies sind jedoch keine Elektroerosionsverfahren, die bekanntlich die Markierung eines Punktes durch Ausbrennen der Metallschicht mittels eines Lichtbogens bewirken.

Aus der DE-A-2 717 335 ist ein Aufzeichungsgerät bekannt, bei dem sich die Ausschaltung der Elektroden in einem kürzeren Zeitraum als die Halbperiode der Netzspannung vollzieht. (Angaben über Dauer der Schreibstrompulse in Relation zum Druckimpuls sind dieser Schrift nicht zu entnehmen).

Aus der DE-A-1 548 595 ist im Zusammenhang mit einem Erosionsverfahren auf die Amplitudenüberwachung der Schreibstrompulse hingewiesen.

Weiterhin ist aus der DE-PS 848 093 ein registrierendes Meßgerät mit einer am Instrumentzeiger befestigten Schreibelektrode für eine Aufzeichung von Meßwerten auf einem relativ dazu bewegten metallisierten Aufzeichnungsträger bekannt, bei welchem die aufgedampfte dünne Metallschicht an den Stellen der Markierungen oder der Schreibspur ausgebrannt wird. Hier handelt es sich um eine Aufzeichnung mittels Elektroerosion.

Aus der DE-PS 22 15 519 sind schließlich ein Verfahren der eingangs genannten Art und eine Anordnung zur Aufzeichnung von Informationen nach dem Elektroerosionsverfahren auf Metallregistrierpapier als Aufzeichnungsträger mit einem eine Anzahl von Elektroden aufweisenden Druckkopf bekannt, bei welchem zur Vermeidung einer Brückenbildung zwischen den Elektroden die Einschaltdauer der den einzelnen Elektroden nacheinander zugeführten Schreibimpulse in jedem Fall kürzer gewählt wird, als die Zeit, nach der der Ausbrennvorgang von selbst beendet sein würde. Mit anderen Worten, bei diesem bekannten Verfahren werden die Elektroden unter Strom abgeschaltet. Das Schalten unter Strom hat aber einmal einen verstärkten Materialverschleiß an der Elektrode und zum andern einen verstärkten Materialtransport zur Folge, wobei sich das verdampfte Metall einmal auf den Elektroden selbst niederschlägt und zum andern die sich zwischen den Elektroden ablagernden staubfeinen Abfallprodukte elektrisch leitend machen kann. D.h., hier kann eine Brückenbildung eben nicht ausgeschlossen werden. Außerdem ist die Ablagerung von Metall auf den Elektrodenspitzen insbesondere dann, wenn es sich um sehr feine dünne Elektroden handelt, außerordentlich lästig und führt bei den heute üblichen sehr dünnen Aluminiumschichten zu den sehr unerwünschten Schleifspuren. Will man jedoch eine außergewöhnlich hohe Auflösung bei der Aufzeichnung von Informationen auf einem metallisierten Aufzeichungsträger erreichen, dann sind die bisher bekannten Verfahren und Anordnungen nicht so recht brauchbar.

Der Erfindung liegt daher die Aufgabe zugrunde ein Verfahren anzugeben, bei dem sich eine hohe Auflösung der aufzuzeichnenden Informationen erzielen läßt, ohne daß es dabei zu den gefürchteten Ablagerungen von Metall an den Elektroden selbst und in der Nachbarschaft der Elektroden kommt. So kann es auch nicht zur einer Brückenbildung kommen.

Die der Erfindung zugrundeliegende Aufgabe wird durch die im Patentanspruch 1 genannten Maßnahmen gelöst.

Eine vorteilhafte Weiterbildung des erfindungsgemäßen Verfahrens ist dem Anspruch 2 zu entnehmen.

Die Erfindung wird nunmehr anhand eines Ausführungsbeispiels in Verbindung mit den beigefügten Zeichnungen im einzelnen näher erläutert.

In den Figuren zeigt
Fig. 1 schematisch Teile eines Elektroerosionsdruckers;
Fig. 2A und 2B eine Prinzipdarstellung des Ausbrennvorgangs bei einem Elektroerosionsdrucker;
Fig. 3A und 3B verschiedene, stark vergrößerte Punkte bei zwei verschiedenen Auflösungen;
Fig. 4A den Querschnitt einer Elektrode und den durch die Elektrode beschriebenen ersten Punkt;
Fig. 4B die anschließend durch die gleiche Elektrode beschriebene Fläche;
Fig. 5 ein Zeitdiagramm des Schreibstroms;
Fig. 6A, 6B und 6C unterschiedliche Entladungszeiten bei konstantem Druckimpuls und
Fig. 7 ein Diagramm zur Bestimmung der optimalen Druckimpulslänge.

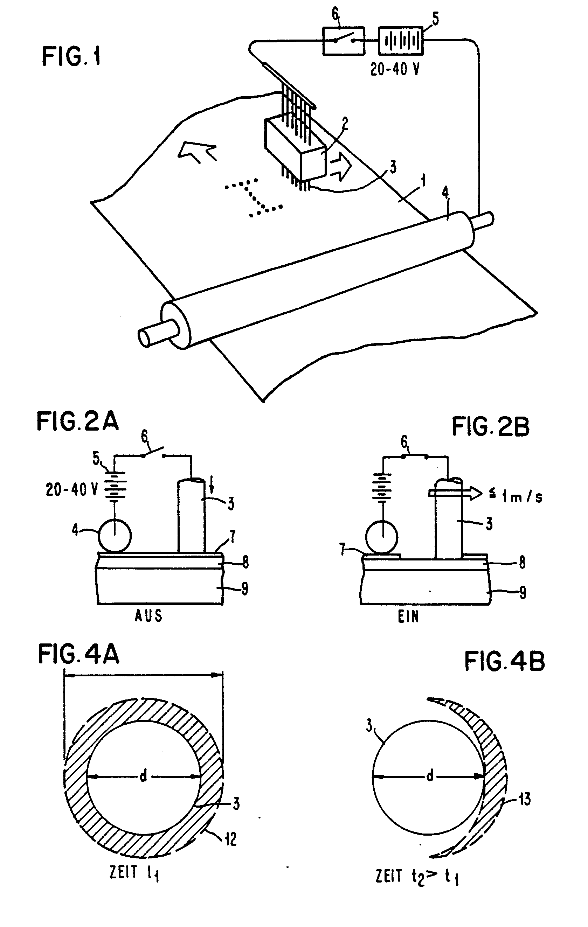

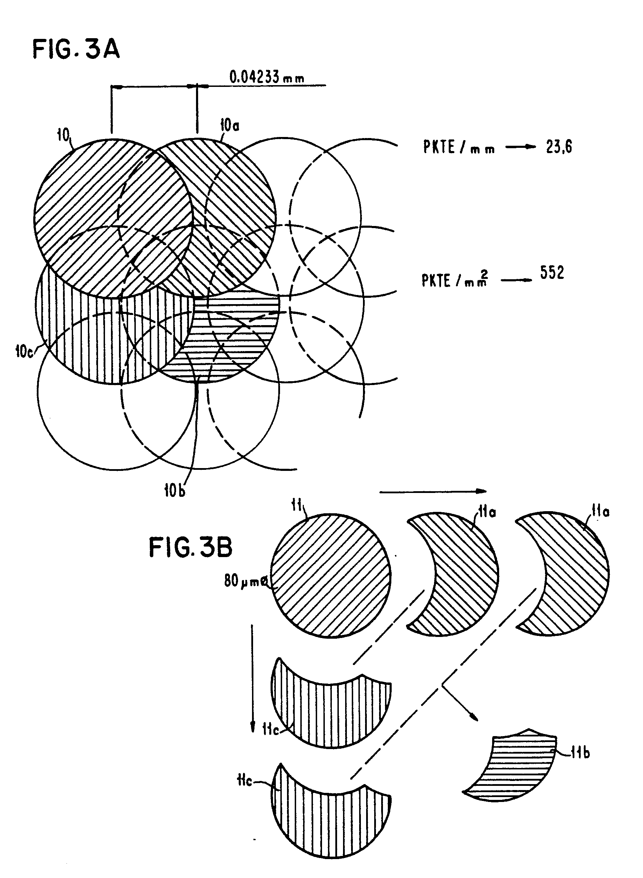

Aus Fig. 1 erkennt man die für die Betrachtung der Erfindung wichtigsten Teile eines Elektroerosionsdruckers. Ein mit Metall beschichteter Aufzeichnungsträger 1, der beispielsweise schrittweise in der durch einen Pfeil auf dem Aufzeichnungsträger angedeuteten Richtung weiterbewegt wird, liegt unter einem Schreibkopf oder Druckkopf 2, der seinerseits in der neben dem Druckkopf durch einen Pfeil angedeuteten Richtung bewegt wird. Dieser Druckkopf weist in dem dargestellten Ausführungsbeispiel eine Anzahl von Schreibelektroden 3 auf, die auf einem Elektrodenkamm befestigt sind. Außerdem läuft auf dem Aufzeichnungsträger eine Kontaktwalze 4 mit, die mit einem Pol einer Spannungsquelle 5 verbunden ist, deren anderer Pol über einen Schalter 6 an die Elektroden 3 anschließbar ist.

Aus Kosten- und Geschwindigkeitsgründen wird der Druckerkopf in der Regel mit mehreren Schreibelektroden ausgerüstet. Zur Verbesserung der Druckqualität wird typischerweise mit Elektrodenanordnungen gearbeitet, bei denen der Elektrodendurchmesser größer als das Druckraster ist. Dies führt dazu, daß durch Überlappungseffekte die jeweils zu erodierende Papierfläche unterschiedlich groß ist. Dies wird im Zusammenhang mit Fig. 3 noch näher erläutert.

Der Schalter 6 steht symbolisch für eine Steuerschaltung, die selektiv den einzelnen Elektroden 3 Stromimpulse als Schreibstromimpulse zuzuführen in der Lage ist.

Aus Fign. 2A und 2B erkennt man dann das allgemeine Prinzip der Arbeitsweise eines Elektroerosionsdruckers. Die Elektrode 3 liegt mit einem leichten Druck von wenigen Gramm auf dem Aufzeichnungsträger 1 auf, der aus einer Aluminiumschicht 7, einer darunterliegenden schwarzen Lackschicht 8 und einem hier aus Papier bestehenden Substrat 9 besteht. Ebenso sieht man die Kontaktrolle 4, die Spannungsquelle 5 und den offenen Schalter 6.

In Fig. 2B ist der Schalter geschlossen, und man erkennt in der Aluminiumschicht 7 einen stark vergrößert dargestellten durch die Elektrode 3 ausgebrannten Punkt, wodurch an dieser Stelle der schwarze Lack 8 sichtbar wird.

Fig. 3A und 3B sollen dabei die Verhältnisse bei einem Druckvorgang etwas näher erläutern. In Fig. 3A ist eine sehr hohe Auflösung mit 23,6 Punkten je mm entsprechend 600 Bildelementen je Zoll, oder 552 Bildpunkten je mm$^2$ oder 360.000 Bildelementen je Quadratzoll dargestellt. Das Bildelement oder der Punkt 10 ist dabei voll ausgedruckt. Bereits der Punkt 10a ist zu nur etwa 2/3 ausgedruckt. Der Punkt 10b weist nur noch etwa 1/3 der Fläche des Punktes 10 auf, während der Punkt 10c etwas mehr als die Hälfte des Punktes 10 aufweist. In Fig. 3B sind die Punkte kleiner und weisen einen Durchmesser etwa 80 μm auf. Man sieht wiederum, daß die Punkte 11 voll ausgedruckt werden, nicht jedoch die Punkte 11a, 11b und 11c, die hier nach Art einer Explosionsdarstellung gezeigt sind.

Fig. 4A zeigt dies auf etwas andere Weise, dort ist der Querschnitt einer Schreibelektrode 3 mit dem Durchmesser d gezeigt. Das durch diese Schreibelektrode zum Zeitpunkt t1 ausgebrannte Bildelement oder der durch diese Schreibelektrode erzeugte Punkt 12 weist naturgemäß einen größeren Durchmesser auf als die Schreibelektrode selbst. Dies geht auf den durch einen Lichtbogen bewirkten Ausbrennvorgang zurück, der nach einer kurzen Zeit erlischt.

Fig. 4B zeigt die gleiche Schreibelektrode 3 zum Zeitpunkt t2 > t1. Man sieht, daß nunmehr nur die schraffierte halbmondförmige Fläche 13 zusätzlich ausgebrannt ist. Die Elektrode hat sich dabei in Richtung des Pfeiles von Fig. 2B bewegt. Die Dauer dieses Erosionsvorganges ist natürlich entsprechend kürzer.

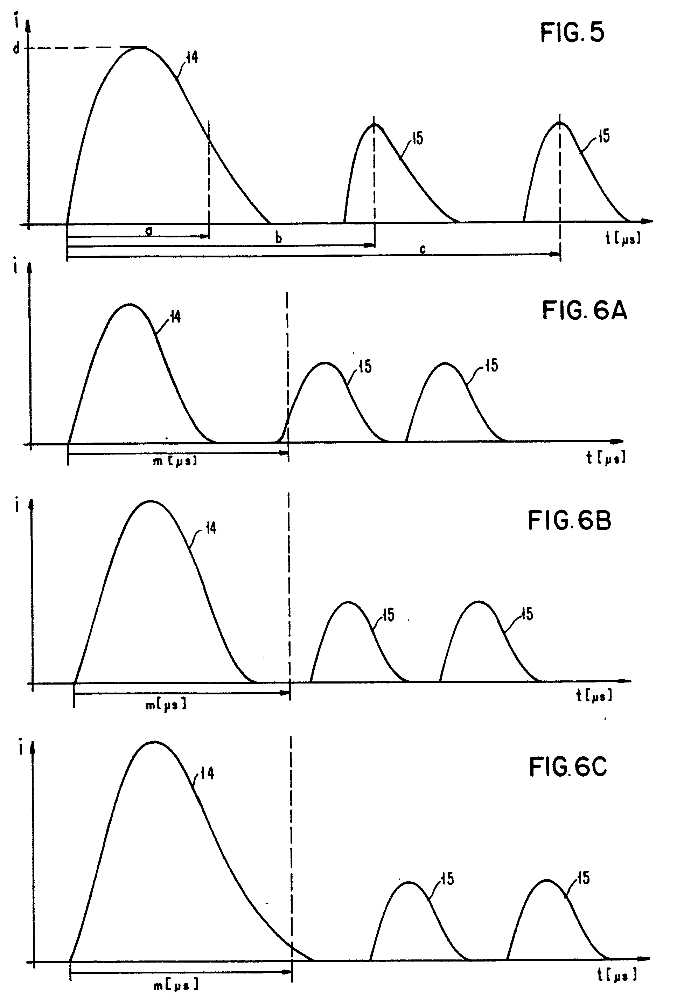

Um dies zu erreichen, ist es erforderlich, sich einmal damit zu befassen, was bei einem solchen Ausbrennvorgang überhaupt vor sich geht. In Fig. 5 ist in einem Strom-Zeitdiagramm die durch Anlegen eines Stroms an eine Schreibelektrode 3 hervorgerufene Primärentladung 14 gezeigt. Da sich jedoch die Elektrode mit einer Geschwindigkeit von beispielsweise 1 m je Sekunde weiterbewegt, wird sie auch nach Ende des Ausbrennvorgangs auf weitere kleinere Aluminiumreste stoßen, so daß Sekundärentladungen 15 auftreten können, die hier ebenfalls rein schematisch angezeigt sind. Diese Sekundärentladungen sind naturgemäß oft sehr viel kleiner. Auch ist die gesamte Darstellung hier nicht maßstäblich zu nehmen. Dabei wird die Lichtbogenentladung solange aufrechterhalten, wie metallischer Aluminiumdampf den Ladungsträgertransport begünstigt. Sobald alles Aluminium verdampft wurde, bricht der Lichtbogen zusammen.

Während des Schreibvorganges sammeln sich verbranntes Aluminiumoxid und andere Verbrennungsrückstände als nichtleitende Abfallprodukte zwischen den Elektroden an.

Weil bei hohen Stromstärken sich metallisches Aluminium auch an der Elektrodenoberfläche niederschlägt, ist es bisher erforderlich gewesen, die Schreibimpulse vorzeitig abzubrechen, da durch diese Ablagerungen sich das Schriftbild verschlechtert.

Dieses Verfahren wirkt sich nämlich auf die Formtreue der einzelnen Punkte nachteilig aus und sollte daher vermieden werden. Die Erfindung geht daher bewußt einen anderen Weg. Dies soll noch näher erläutert werden.

In Fig. 5 sind außerdem drei Druckimpulslängen eingezeichnet, nämlich die Druckimpulse a, b und c, um anzudeuten, daß sowohl bei der Primärentladung als auch bei den Sekundärentladungen die Möglichkeit besteht, daß das Ende des Schreibstrompulses mit einer solchen Entladung zusammenfällt und zu den nunmehr erkannten großen Schwierigkeiten führt.

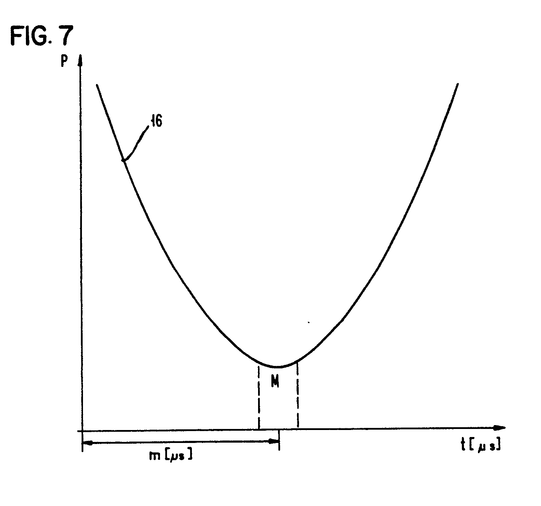

Nun haben aber intensive Untersuchungen dieser Phänomene gezeigt, daß es eine Möglichkeit gibt, diese Schwierigkeiten zu umgehen. So kann an jeder Elektrode eine Stromabfühlschaltung angebracht werden, die dann, wenn am Ende des Ausbrennvorgangs der durch die Schreibelektrode fließende Strom abreißt, über eine Rückkopplungsschleife den Druckimpuls abschaltet. Auf diese Weise kann mit großer Präzision sichergestellt werden, daß der Schreibstrompuls niemals abgeschaltet wird, so lange noch Strom durch die Schreibelektrode fließt. Wie in Fign. 6A, 6B und 6C schematisch dargestellt ist, gibt es in der Tat einen Bereich, in dem das Ende eines konstantgehaltenen Druckimpulses weder mit einer Primärentladung noch mit einer Sekundärentladung zusammenfällt. Legt man das Ende des Druckimpulses nämlich in diese Lücke, dann besteht eine außerordentlich hohe Wahrscheinlichkeit, daß der Schaltvorgang, d.h. das Ende des Druckimpulses nicht mit einer Primärentladung oder mit einer Sekundärentladung zusammenfällt. Fig. 7 zeigt dabei die Wahrscheinlichkeitskurve 16, wobei man erkennt, daß ein Druckimpuls von der Länge m (Mikrosekunden) mit dem Minimum M der Wahrscheinlichkeitskurve 16 zusammenfällt. Es ist zwar allgemein bekannt, daß die Ausbrenndauer der einzelnen Punkte oder Bildelemente auf einem metallisierten

Aufzeichnungträger eine quasi-statistische Verteilung aufweist. Diese Verteilung kann aber bei entsprechend hoher Qualität des verwendeten metallisierten Aufzeichnungsträgers in so engen Grenzen gehalten werden, daß sich im Minimum der Wahrscheinlichkeitskurve 16 ein enger Bereich ergibt, in dessen Mitte dann das Ende des konstantzuhaltenden Druckimpulses gelegt werden kann.

Es hat sich nunmehr gezeigt, daß mit dieser Auswahl der Dauer des Druckimpulses eines der schwierigsten Probleme bei einem Elektroerosionsdrucker mit sehr hoher Auflösung gelöst werden konnte.

## Patentansprüche

1. Verfahren zum Aufzeichnen von durch Druckimpulse vorgegebenen Informationen auf einem elektrosensitiven Aufzeichnungsträger mit einem auf diesem bewegbaren Elektroden-Druckkopf unter Benutzung einer Steuerschaltung für die zeitgerechte Erzeugung von die Aufzeichnung bewirkenden Schreibstrompulsen.
dadurch gekennzeichnet,
daß die Dauer und Amplitude jedes Schreibstrompulses so gewählt werden, daß der durch den jeweiligen Druckimpuls ausgelöste Schreibstrompuls bei Beendigung eines durch eine Elektrode durchgeführten Aufzeichungsvorganges spätestens mit dem Ende des Druckimpulses, ohne Einwirkung einer seine Dauer beeinflussenden Schaltmaßnahme auf den Wert Null abgefallen ist.

2. Verfahren nach Anspruch 1,
dadurch gekennzeichnet,
daß die Dauer und Amplitude eines jeden Schreibstrompulses während des Aufzeichungsvorganges über den die Elektrode durchfließenden Strom gemessen werden und daß der Druckimpuls dann beendet wird, wenn das Ende des Aufzeichnungsvorganges durch das Abfallen des die Elektrode durchfließenden Stromes auf den Wert Null festgestellt wird.

## Claims

1. Method of recording information, predetermined by print pulses, on an electrosensitive record carrier with an electrode print head movable thereon, using a control circuit for generating on time print current pulses effecting a recording step,
characterized in that the duration and the amplitude of each print current pulse are chosen such that the print current pulse, triggered by the respective print pulse, has dropped to zero upon completion of a recording step performed by an electrode, however at the latest upon termination of the print pulse, without a switching measure influencing its duration.

2. Method according to claim 1,

characterized in that the duration and amplitude of each print current pulse during the recording step are measured as a function of the current flowing through the electrode, and that the print pulse is terminated if the end of the recording step is indicated by the current flowing through the electrode dropping to zero.

## Revendications

1. Procédé d'enregistrement d'informations traduites par des impulsions d'impression, sur un support d'enregistrement électrosensible et à l'aide d'une tête d'impression à électrode qui est déplaçable sur celui-ci, en utilisant un circuit de commande permettant l'émission, réglée dans le temps, d'impulsions de courant d'écriture qui produisent l'enregistrement, caractérisé en ce que l'on choisit la durée et l'amplitude de chaque impulsion de courant d'écriture de façon telle que l'impulsion de courant d'écriture qui est déclenchée par une impulsion correspondante d'impression soit retombée à la valeur zéro lorsque s'achève une opératian d'enregistrement réalisée à l'aide d'une électrode, et au plus tard à la fin de l'impulsion d'impression, sans qu'il y ait une action de la part d'une disposition de commutation ayant une influence sur sa durée.

2. Procédé selon la revendicatian 1, caractérisé en ce que l'on mesure la durée et l'amplitude de chacune des impulsions de courant d'écriture au cours de l'opération d'enregistrement et à l'aide du courant qui traverse l'électrode et en ce qu'on interrompt l'impulsion d'impression lorsque la fin de cette opération d'enregistrement se trouve établie du fait de la retombée à la valeur zéro de ce courant traversant l'électrode.

FIG.1

6    5

20-40 V

2

3    1    4

FIG.2A

5

20-40 V

6

3

4    7    8    9

AUS

FIG.2B

6

≤ 1 m/s

7    3    8    9

EIN

FIG.4A

d

3    12

ZEIT $t_1$

FIG.4B

3

d

13

ZEIT $t_2 > t_1$

## FIG. 3A

0.04233 mm

PKTE / mm ⟶ 23,6

PKTE / mm² ⟶ 552

## FIG. 3B

80 μmØ

FIG. 5

FIG. 6A

FIG. 6B

FIG. 6C

5

FIG. 7